# DEMANDE DE BREVET EUROPEEN

(11) **EP 4 560 482 A1**
(43) Date de publication de la demande: **28.05.2025**
(21) Numéro de dépôt: 23307012.7
(22) Date de dépôt: 21.11.2023
(51) Int. Cl.: G06F 15/163, H04L 12/00

(54) **PROCÉDÉ ET SYSTÈME DE COMMUNICATION INTRA ET INTER CLUSTERS**

(71) Demandeur: BULL SAS, 78340 Les Clayes-Sous-Bois (FR)
(72) Inventeur: BOYER, Quentin, 38240 Meylan (FR); BARBE, Mathieu, 38170 Seyssinet Pariset (FR)
(74) Mandataire: Cabinet Camus Lebkiri

(57) **Abrégé**

Un aspect de l'invention concerne un calculateur hautes performances comprenant une pluralité de clusters (21,22) interconnectés par un réseau IP (2), chaque cluster (21,22) comprenant :
- Au moins une passerelle Ethernet (215,225) configurée pour transmettre des données entre le cluster (21,22) et le réseau IP (2) stockant au moins une première table de routage comprenant au moins, pour chaque autre cluster de la pluralité de clusters (21,22), une association d'une adresse d'une passerelle (215,225) avec une adresse IP de destination comprise dans le cluster (21,22) comprenant la passerelle (215,225),
- Une pluralité de noeuds (N,211,212,221,222) de calcul et/ou de stockage, chaque noeud (N,211,212,221,222) :
o étant configuré pour exécuter au moins une instance d'une application de calcul hautes performances et/ou de stockage,
o comprenant au moins une carte réseau (NIC1) implémentant un protocole d'interconnexion hautes performances basé sur Ethernet et étant configurée pour implémenter un protocole de résolution d'adresse, la carte réseau (NIC1) stockant au moins une deuxième table de routage comprenant au moins, pour chaque autre cluster de la pluralité de clusters (21,22), une association d'une adresse d'une passerelle (215) du premier cluster (21) avec l'identifiant de l'autre cluster (22) accessible à partir de la passerelle (215) du premier cluster (21),
o stockant au moins une troisième table de routage comprenant au moins, pour chaque autre cluster de la pluralité de clusters (21,22), une association d'un identifiant d'une instance de l'application avec un identifiant du cluster comprenant le noeud (N,211,212,221,222) exécutant l'instance de l'application, avec un identifiant réseau unique de l'instance de l'application et avec une adresse IP de la carte réseau (NIC1) du noeud (N,211,212,221,222) exécutant l'instance de l'application,

Au moins un commutateur d'interconnexion intra-cluster (214,224) configuré pour connecter chaque noeud (N,211,212,221,222) et la passerelle (215,225).

## Description

### DOMAINE TECHNIQUE DE L'INVENTION

Le domaine technique de l'invention est celui du calcul haute performance, aussi appelé « HPC » de l'anglais « High-Performance Computing ».

La présente invention concerne un procédé et un système de communication inter et intra-clusters en particulier en configurant d'une manière particulière les cartes réseau.

### ARRIERE-PLAN TECHNOLOGIQUE DE L'INVENTION

Les calculateurs haute performance sont classiquement répartis en clusters, ce afin de répartir l'exécution des applications sur plusieurs machines. En effet, ces applications de calcul haute performance nécessitent d'importantes ressources de calcul qui ne peuvent être installées sur une seule machine. Pour réaliser les calculs les plus importants, entre 10 000 et 100 000 machines sont parfois nécessaires, et ces machines sont regroupées en clusters.

Un cluster, ou « groupement », est un ensemble de machines, souvent conçues pour la même application, au même moment, et avec les mêmes composants. Un cluster a par exemple une topologie prédéfinie, adaptée à l'exécution d'une application particulière ou d'un type d'application particulier.

Pour interconnecter ces machines et créer un cluster, des réseaux spécialisés sont nécessaires, par exemple des réseaux implémentant des protocoles d'interconnexion tels que Infiniband^{®} ou BXI^{®} (Bull. eXascale Interconnect).

Un problème intervient pour connecter plusieurs clusters entre eux. Un tel problème peut par exemple se poser si un utilisateur veut combiner un cluster existant avec un cluster neuf ou avec un autre cluster existant. Actuellement, il n'est pas prévu l'interconnexion de plusieurs clusters entre eux, car un cluster est dédié à la mise en oeuvre d'une application. Pour interconnecter plusieurs clusters, il est alors souvent choisi d'utiliser la suite de protocoles Internet, pour échanger des données, et des machines réalisant une fonction de « pont » ou de « passerelle ». Ces passerelles copient les données, du protocole d'interconnexion intra-cluster, par exemple BXI, au protocole réseau utilisé pour interconnecter les deux clusters, par exemple IP. Mais ce type d'interconnexion de clusters est surtout utilisé pour échanger des données entre applications, et ne permet pas des performances acceptables pour exécuter, sur plusieurs clusters, la même application.

Les réseaux BXI utilisent l'interface de programmation applicative (« API » de l'anglais « Application Programming Interface ») Portals^{®} en tant que protocole de communication pour réaliser des communications entre noeuds.

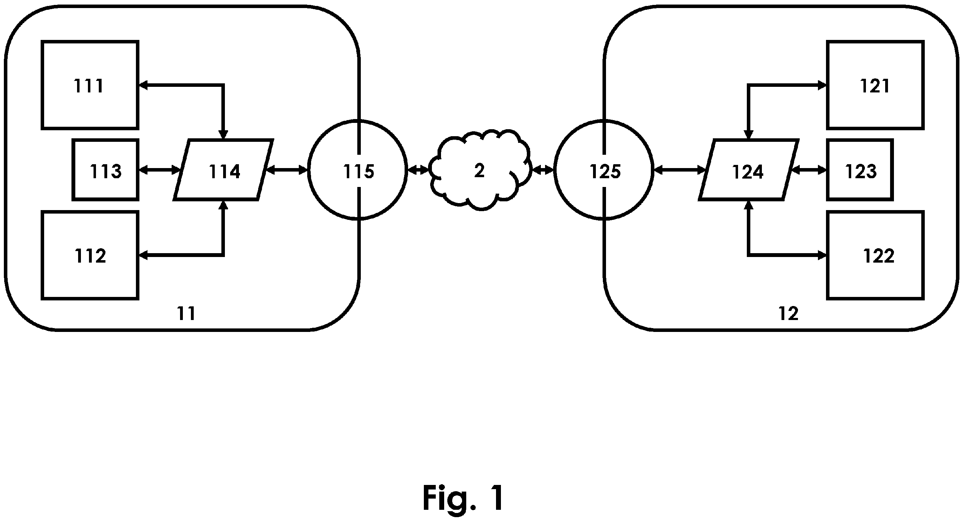

Une représentation schématique de deux clusters interconnectés selon l'art antérieur est montrée à la Figure 1. Chaque cluster, respectivement 11 et 12 comprend deux noeuds, respectivement 111,112 et 121,122, un AFM respectivement 113 et 123, un commutateur respectivement 114 et 124, et une passerelle respectivement 115 et 125. Les noeuds 11, 112, 121 et 122 sont par exemple des noeuds de calcul et/ou de stockage. L'AFM 113 et 123, de l'anglais « Advanced Fabric Management » est un logiciel responsable de la gestion et du routage des composants du cluster. Les commutateurs sont des composants réalisant l'interconnexion réseau des composants du cluster, il est aussi appelé « switch » de l'anglais. Enfin, les passerelles 115 et 125 permettent la traduction des données dans le protocole du cluster 11 et 12 vers le protocole du réseau 2 interconnectant les deux clusters 11 et 12, et inversement.

Pour sa première génération de réseau d'interconnexion, les cartes réseau et les commutateurs BXI utilisent leur propre protocole de liaison (couche 2 du modèle réseau OSI). Cette approche est logique en considérant un cluster de calcul fermé comme prévu pour cette génération et comme il existe actuellement. Dans cette approche, tous les paquets de couche 3 OSI doivent être encapsulés dans une trame BXI pour naviguer sur le réseau. Les commutateurs BXI 114 et 124 sont en charge de commuter les trames vers le bon destinataire à l'aide du NID Portals (Identifiant de Noeud, de l'anglais « Network Identifier » pour « identifiant réseau », permettant d'identifier la carte réseau du noeud) présent dans l'en-tête niveau 2 tout en se reposant sur la topologie du cluster construit par l'AFM 113 et 123. Dans cette approche, l'ensemble des périphériques reliés au réseau BXI doit être compatible avec la couche de liaison BXI niveau 2. Ainsi, l'utilisation de commutateur ou de routeur à usage général n'est donc pas permis. Pour pallier cette contrainte, des passerelles réseaux 115 et 125 sont mises en place avec, du côté du cluster, des cartes BXI et du côté du réseau 2, des cartes Ethernet standard ou InfiniBand.

Par ailleurs, aucun des réseaux de clusters existants ne permet de matérialiser l'existence d'un autre cluster. Il n'est donc pas possible, pour un premier noeud 111 du premier cluster 11 d'adresser directement un autre noeud 121 du deuxième cluster 12.

Il existe donc un besoin d'avoir une solution de communication inter-clusters.

### RESUME DE L'INVENTION

L'invention offre une solution aux problèmes évoqués précédemment, en permettant des échanges de données hautes performances inter-cluster.

Un aspect de l'invention concerne un calculateur hautes performances comprenant une pluralité de clusters interconnectés par un réseau IP, chaque cluster comprenant :
- Au moins une passerelle Ethernet configurée pour transmettre des données entre le cluster et le réseau IP stockant au moins une première table de routage comprenant au moins, pour chaque autre cluster de la pluralité de clusters, une association d'une adresse d'une passerelle avec une adresse IP de destination comprise dans le cluster comprenant la passerelle,
- Une pluralité de noeuds de calcul et/ou de stockage, chaque noeud :
   - étant configuré pour exécuter au moins une instance d'une application de calcul hautes performances ou de stockage,
   - comprenant au moins une carte réseau implémentant un protocole d'interconnexion hautes performances basé sur Ethernet et étant configurée pour implémenter un protocole de résolution d'adresse, la carte réseau stockant au moins une deuxième table de routage comprenant au moins, pour chaque autre cluster de la pluralité de clusters, une association d'une adresse d'une passerelle du premier cluster avec l'identifiant de l'autre cluster accessible à partir de la passerelle du premier cluster,
   - stockant au moins une troisième table de routage comprenant au moins, pour chaque autre cluster de la pluralité de clusters, une association d'un identifiant d'une instance de l'application avec un identifiant du cluster comprenant le noeud exécutant l'instance de l'application, avec un identifiant réseau unique de l'instance de l'application et avec une adresse IP de la carte réseau du noeud exécutant l'instance de l'application,
- Au moins un commutateur d'interconnexion intra-cluster configuré pour connecter chaque noeud et la passerelle.

Grâce à l'invention, il est possible de réaliser des échanges de données inter-cluster via un protocole hautes performances tel que BXI ou Infiniband, tant que ce protocole se repose au moins en partie sur Ethernet. Cela est rendu possible par une simple configuration des cartes réseaux des noeuds des clusters, en les initialisant avec une table de routage prédéfinie et des instructions prédéfinies pour transmettre une requête de données inter-cluster. Cela est aussi permis par l'implémentation d'un nommage particulier des différents composants du réseau, et par l'utilisation d'un protocole de résolution d'adresse pour obtenir l'adresse de la passerelle cible. Enfin, l'invention permet une simplification notable des passerelles réseau des clusters, en utilisant de simples routeurs IP plutôt que des passerelles complexes et coûteuses comprenant deux cartes réseaux et des moyens dédiés à la traduction d'un protocole réseau en un autre, l'invention améliorant par la même occasion les performances d'échanges de données inter-clusters.

Outre les caractéristiques qui viennent d'être évoquées dans le paragraphe précédent, le système selon un aspect de l'invention peut présenter une ou plusieurs caractéristiques complémentaires parmi les suivantes, considérées individuellement ou selon toutes les combinaisons techniquement possibles :
- dans lequel le protocole d'interconnexion hautes performances basé sur Ethernet met en oeuvre une bibliothèque réseau hautes performances.
- le protocole d'interconnexion hautes performances basé sur Ethernet est respectivement BXI^{®} ou Infiniband^{®} et la bibliothèque réseau hautes performances est respectivement Portals^{®} ou Verbs^{®}.
- un identifiant réseau et un identifiant de processus sont attribués à chaque instance de l'application de calcul hautes performances, l'identifiant réseau étant formé d'un identifiant du cluster dans lequel le noeud exécutant l'instance se trouve, d'un identifiant du noeud exécutant l'instance ou d'une machine virtuelle exécutant l'instance, et d'un identifiant physique de la carte réseau du noeud exécutant l'instance.
- au moins un noeud de la pluralité de noeuds de calcul comprend une machine virtuelle exécutant l'instance.

Un autre aspect de l'invention concerne un procédé de communication inter-clusters dans un calculateur hautes performances selon l'invention, le procédé comprenant :
- Réception, par une carte réseau d'un noeud émetteur de la pluralité de noeuds du premier cluster, d'une requête d'envoi de données à au moins une instance destinatrice exécutée par un noeud destinataire de la pluralité de noeuds du deuxième cluster, la requête provenant d'une instance d'une application de calcul hautes performances et comprenant un identifiant de l'instance destinatrice et au moins une donnée,
- Transcription, par la carte réseau du noeud émetteur, de la requête reçue en requête de la bibliothèque réseau du protocole d'interconnexion hautes performances, la transcription de la requête comprenant la transcription de l'identifiant de l'instance destinatrice en un identifiant unique dans un format de la bibliothèque réseau,
- Encapsulation, par la carte réseau du noeud émetteur, de la requête transcrite dans un paquet IP comprenant l'adresse IP de la carte réseau destinatrice,
- Encapsulation du paquet IP dans une trame Ethernet comprenant l'adresse de la passerelle du premier cluster,
- Transmission, via le commutateur et la passerelle du premier cluster, à la passerelle du deuxième cluster, du paquet IP,
- Transmission, par la passerelle du deuxième cluster, du paquet IP à la carte réseau destinatrice du noeud exécutant l'instance destinatrice,
- Décapsulation, par la carte réseau destinatrice, de la trame Ethernet et du paquet IP pour obtenir la requête comprenant la au moins une donnée,
- Transmission, par la carte réseau destinatrice, à l'instance destinatrice, de la au moins une donnée.

Dans un mode de réalisation, le procédé comprend en outre, après l'étape de transcription et avant l'étape d'encapsulation dans un paquet IP, une étape de comparaison, par la carte réseau du noeud émetteur, de l'identifiant du cluster de l'identifiant réseau de l'instance destinatrice avec l'identifiant de cluster de la carte réseau émettrice, le procédé de communication inter-cluster n'étant poursuivi que si l'identifiant du cluster de l'identifiant réseau de l'instance destinatrice est différent de l'identifiant de cluster de la carte réseau émettrice.

Dans un mode de réalisation, le procédé comprend en outre, entre l'étape d'encapsulation de la requête dans le paquet IP et l'encapsulation du paquet IP dans la trame Ethernet, une étape d'émission, par la carte réseau du noeud émetteur, d'une requête de résolution d'adresse à partir d'une adresse IP de la passerelle du premier cluster pour obtenir une adresse physique de la passerelle du premier cluster, l'adresse IP de la passerelle du premier cluster étant stockée dans la deuxième table de routage associée à l'identifiant du deuxième cluster.

Dans un mode de réalisation, le procédé comprend en outre l'émission d'un acquittement de réception de la au moins une donnée, par la carte réseau destinatrice, à la carte réseau émettrice.

Dans un mode de réalisation, la bibliothèque réseau hautes performances utilisée est la bibliothèque réseau Portals^{®}, et dans lequel le format de la bibliothèque réseau est un identifiant comprenant l'identifiant réseau de l'instance destinatrice et l'identifiant de processus de l'instance destinatrice.

Dans un mode de réalisation, lequel le paquet IP comprend un en-tête indiquant que la requête encapsulée est une requête Portals^{®}.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un système selon l'art antérieur,
- La figure 2 montre une représentation schématique d'un système selon l'invention,
- La figure 3 montre une représentation schématique d'un noeud d'un cluster d'un système selon l'invention,
- La figure 4 montre une représentation schématique d'un procédé selon l'invention.

### DESCRIPTION DETAILLEE

Sauf précision contraire, un même élément apparaissant sur des figures différentes présente une référence unique.

L'invention porte sur un système et sur un procédé d'échange de données entre clusters du système. Le système comprend plusieurs clusters de calcul. Le système est par exemple un centre de calcul hautes performances, configuré pour exécuter une application de calcul hautes performances.

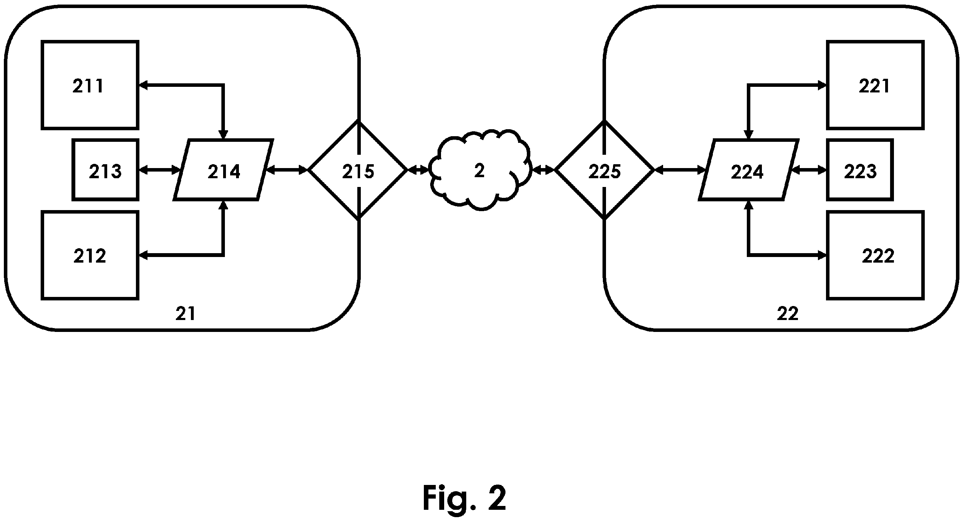

Le système selon l'invention est représenté schématiquement à la Figure 2. Le système comprend une pluralité de clusters. La Figure 2 ne représente que deux clusters 21 et 22, mais le système selon l'invention peut comprendre plus de deux clusters. Les clusters sont reliés par un réseau 2, le réseau 2 étant un réseau IP « Internet Protocol », interconnectant les clusters entre eux. Le réseau 2 est un réseau de niveau 3 du modèle OSI (de l'anglais Open Systems Interconnection). Selon l'invention, les clusters représentent des réseaux Ethernet de niveau 2 du modèle OSI.

Pour que les clusters se comportent comme des sous-réseaux Ethernet selon l'invention, certains composants des clusters sont modifiés, et notamment les noeuds de calcul.

Tout d'abord, la passerelle de chaque cluster reliant le cluster au réseau 2 est un simple routeur Ethernet, c'est-à-dire comprenant des ports Ethernet. Ainsi, les passerelles 215 et 225 respectivement des clusters 21 et 22 sont des routeurs Ethernet, au contraire de l'art antérieur qui comprend des passerelles complexes à plusieurs cartes réseau. Chaque passerelle stocke une première table de routage, associant une adresse de passerelle avec une adresse IP de destination comprise dans le cluster comprenant la passerelle. Par exemple, une telle table de routage stockée par la passerelle 215 comprend l'association suivante :
- adresse IP de la passerelle 225, adresse IP de destination et masque du réseau du cluster comprenant la passerelle.

Chaque cluster 21 et 22 comprend au moins un commutateur d'interconnexion respectivement 214 et 224. Ces commutateurs d'interconnexion 214 et 224 sont des commutateurs d'interconnexion selon un protocole d'interconnexion hautes performances basé sur Ethernet, par exemple BXI^{®} ou Infiniband^{®}.

Ces commutateurs d'interconnexion, respectivement 214 et 224 connectent tous les noeuds de leur cluster respectivement 21 et 22 à la passerelle respectivement 215 et 225. Ainsi, le commutateur d'interconnexion 214 interconnecte les noeuds 211 et 212 et la passerelle 215. Le commutateur d'interconnexion 224 interconnecte les noeuds 221 et 222 et la passerelle 225.

Les noeuds du cluster sont configurés d'une manière particulière, pour pouvoir router les données sortantes à l'extérieur du cluster et les données entrantes à l'intérieur du cluster.

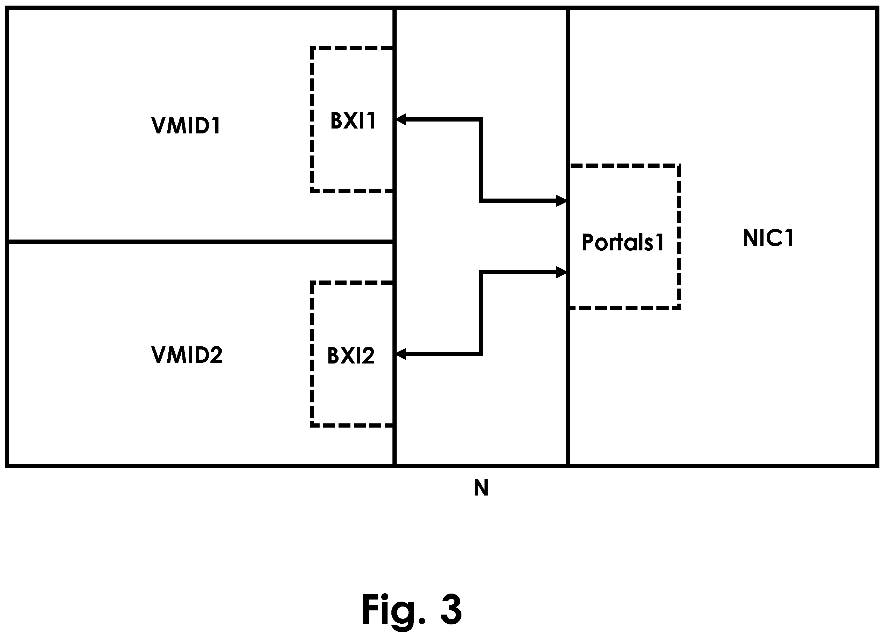

La Figure 3 montre une représentation schématique d'un noeud N. Chaque noeud de chaque cluster du système a l'architecture du noeud N représenté à la Figure 3. Le noeud N représenté à la Figure 3 comprend au moins un processeur et une mémoire. Le processeur permet d'exécuter au moins une instance d'une application de calcul hautes performances, répartie sur le système entier. Pour cela, le processeur peut exécuter directement l'instance de l'application ou exécuter une ou plusieurs machines virtuelles VMID1 et VMID2 exécutant chacune une instance de l'application. A la Figure 3, le noeud N a deux machines virtuelles VMID1 et VMID2, mais l'invention n'est pas limitée à deux machines virtuelles. Ainsi, les deux clusters 21 et 22 exécutent chacun des instances différentes de la même application de calcul hautes performances. L'invention permet à ces instances de communiquer entre elles, même si ces instances ne sont pas situées sur le même cluster.

Pour cela, le noeud N comprend une carte réseau NIC1. La carte réseau NIC1 est une carte réseau implémentant le protocole d'interconnexion hautes performances basé sur Ethernet, par exemple BXI^{®} ou Infiniband^{®}. La carte réseau NIC1 permet au noeud N de communiquer au sein du cluster et en dehors du cluster. Pour cela, les machines virtuelles VMID1 et VMID2 comprennent chacune un port virtuel respectivement BXI1 et BXI2 configuré pour communiquer avec la carte réseau NIC1. Cela permet à la carte réseau NIC1 d'adresser les machines virtuelles VMID1 et VMID2.

Selon l'invention, le noeud N comprend deux tables de routage. Une première table de routage stockée par le noeud N dans une mémoire qu'il comprend, est une table de routage comprenant, pour chaque autre cluster du système, une association d'un identifiant d'une instance de l'application (aussi appelé « rang ») avec le cluster comprenant le noeud exécutant l'instance, avec un identifiant réseau unique (NID, décrit plus loin) de l'instance de l'application et avec une adresse IP de la carte réseau NIC1 du noeud exécutant l'instance de l'application. Par exemple, la première table de routage du noeud 211 du cluster 21 comprend les identifiants (rang) de toutes les instances de l'application exécutées dans le cluster 22 associées à un identifiant du cluster 22, à un NID de l'instance de l'application, et à une adresse IP de la carte réseau NIC1 du noeud 222 du cluster 22. Par exemple, la première table de routage du noeud 211 du cluster 21 comprend au moins les associations suivantes :
- Rang d'une instance de l'application 1, NID de l'instance de l'application 1, adresse IP de la carte réseau NIC1 du noeud 221,
- Rang d'une instance de l'application 2, NID de l'instance de l'application 2, adresse IP de la carte réseau NIC1 du noeud 221,
- Rang d'une instance de l'application 3, NID de l'instance de l'application 3, adresse IP de la carte réseau NIC1 du noeud 222,
- Rang d'une instance de l'application 4, NID de l'instance de l'application 4, adresse IP de la carte réseau NIC1 du noeud 222.

En outre, la première table de routage peut comprendre les mêmes informations pour toutes les instances de l'application exécutées dans le cluster 21, c'est-à-dire que la première table de routage comprend toutes les informations concernant toutes les instances exécutées dans le système.

Cette première table de routage est utilisée par la carte réseau NIC1 lorsque l'instance exécutée par l'une des deux machines virtuelles VMID1 ou VMID2 veut envoyer des données à une instance de l'application exécutée par le cluster 22, afin de déterminer si l'instance de destination appartient au cluster 21 ou non. Pour cela, la carte réseau NIC1 peut stocker la première table de routage, lorsque l'instance de l'application exécutée par le noeud s'enregistre auprès de la carte réseau NIC1. Alternativement, la première table de routage peut être chargée dans l'instance de l'application exécutée par le noeud N et, lors d'une demande de transfert réseau, l'instance de l'application transmettant alors les données issues de la première table de routage à la carte réseau NIC1.

La carte réseau NIC1 stocke une deuxième table de routage comprenant, pour chaque autre cluster du système, une adresse IP de la passerelle du premier cluster (par exemple ici, du cluster 21) associée à l'identifiant de l'autre cluster. Ainsi, pour le système de la Figure 2, la carte réseau NIC1 du noeud 211 comprend :
- Adresse IP de la passerelle 215, identifiant du cluster 22.

Cette deuxième table de routage est utilisée par la carte réseau NIC1 lorsque l'instance exécutée par l'une des deux machines virtuelles VMID1 ou VMID2 veut envoyer des données à une instance de l'application exécutée par le cluster 22, pour savoir quelle passerelle utiliser dans son cluster 21 pour joindre le cluster 22. Dans l'exemple de la Figure 2, il n'y a qu'une passerelle par cluster, mais cette table est utile lorsqu'il y a plus d'une passerelle par cluster.

Chaque carte réseau NIC1 utilise une bibliothèque de communication hautes performances, par exemple la bibliothèque Portals^{®} lorsque le protocole est BXI^{®}, ou la bibliothèque Verbs^{®} lorsque le protocole est Infiniband^{®}. Par exemple, la version 4 de Portals^{®} peut être utilisée avec BXI^{®} version 2.

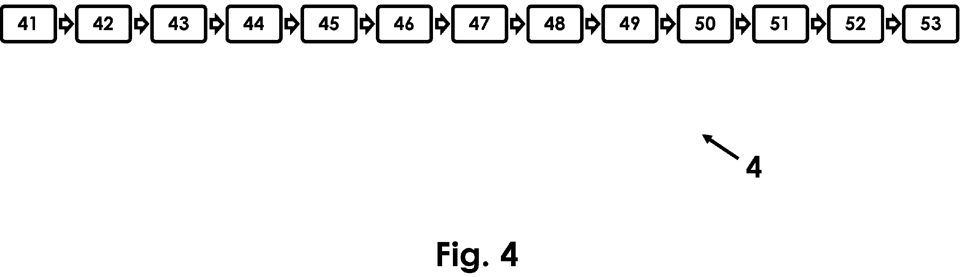

L'invention porte en outre sur un procédé d'échanges de données, c'est-à-dire de communication, entre un cluster du système et un autre cluster du système. Le procédé 4 est représenté schématiquement à la Figure 4. Pour illustrer l'invention, un échange de données entre la machine virtuelle VMID1 du noeud 211 du cluster 21 et la machine virtuelle VMID2 du noeud 222 du cluster 22 sera décrit par la suite.

Le procédé 4 comprend une première étape 41 d'initialisation de la bibliothèque de communication. Pour cela, chaque instance de l'application de calcul hautes performances exécutée dans le système se voit attribuer un identifiant réseau unique et un identifiant de processus (PID), de manière à être adressée par les autres instances. L'identifiant réseau unique (NID) de l'instance est un triplet, qui sera par exemple un identifiant Portais si cette bibliothèque réseau est utilisée. Ce NID Portals est composé de trois champs :
- L'identifiant du cluster : cluster_id, par exemple 21.
- L'identifiant de la machine virtuelle ou du noeud exécutant l'instance : par exemple VMID1.
- L'identifiant de la carte réseau NIC1 au sein du cluster : un identifiant réseau physique dans le cluster, par exemple 10.

Un exemple de NID d'une instance de l'application de calcul hautes performances est alors 21-VMID1-10. A l'étape d'initialisation 41, l'identifiant réseau unique NID, l'adresse IP associée au NID et l'identifiant de processus unique PID de chaque instance de l'application sont distribués à l'ensemble des participants, c'est-à-dire à l'ensemble des instances de l'application et aux moteurs de bibliothèques de communication des cartes réseau des noeuds qui les exécutent.

Le procédé 4 comprend ensuite une étape 42 d'émission, par l'instance de l'application de calcul hautes performances exécutée par la machine virtuelle VMID1 du noeud 211 du cluster 21, d'une requête d'envoi de données à destination de l'instance exécutée par la machine virtuelle VMID2 du noeud 222 du cluster 22. La requête comprend un identifiant de l'instance destinatrice.

Cette requête est reçue, à une étape 43, par la carte réseau NIC1 du noeud 211, appelé noeud émetteur.

Le procédé 4 comprend ensuite une étape 44 de transcription, par la carte réseau NIC1 du noeud 211, de la requête reçue en requête de la bibliothèque réseau du protocole d'interconnexion hautes performances, par exemple en requête Portals^{®} si le protocole utilisé est BXI^{®}. La transcription 44 de la requête comprend aussi la transcription de l'identifiant de l'instance destinatrice en identifiant réseau unique dans la bibliothèque de communication, c'est-à-dire Portals pour l'exemple présent. Pour cela, cet identifiant réseau unique Portals est utilisé avec l'identifiant de processus Portals (PID) de l'instance destinatrice pour former un identifiant Portals « ptl_process t » utilisé pour les opérations réseau Portals. Un identifiant ptl_process_t permettra donc d'identifier de façon unique un processus Portals au sein d'un centre de calcul, et donc au sein du système.

Le procédé 4 comprend ensuite une étape 45 de comparaison, par la carte réseau NIC1 du noeud émetteur 211, de l'identifiant du cluster compris dans l'identifiant réseau de l'instance destinatrice avec l'identifiant de cluster de la carte réseau NIC1 émettrice. Par exemple, dans le cas présent, l'identifiant du cluster de la carte réseau émettrice est 21 et l'identifiant du cluster compris dans l'identifiant réseau de l'instance destinatrice est 22. Cette comparaison 45 permet à la carte réseau NIC1 émettrice de savoir si la requête est à destination interne du cluster 21 ou si elle est à destination d'un autre cluster, dans le cas présent du cluster 22. Si l'identifiant du cluster compris dans l'identifiant réseau de l'instance destinatrice est différent de l'identifiant de cluster de la carte réseau émettrice, la carte réseau émettrice sait que la communication est inter-cluster et le procédé est poursuivi aux étapes suivantes.

Le procédé 4 comprend alors une étape 46 d'encapsulation, par la carte réseau NIC1 du noeud émetteur 211, de la requête transcrite en bibliothèque réseau dans un paquet IP. Le paquet IP identifie alors, en en-tête, le protocole réseau utilisé dans la requête encapsulée, c'est-à-dire Portals dans l'exemple présent, ainsi que l'adresse IP de la carte réseau NIC1 du noeud cible 222.

Pour obtenir une adresse physique de la passerelle du premier cluster 21, la carte réseau utilise un protocole de résolution d'adresse, par exemple ARP (de l'anglais « Address Resolution Protocol »). Ainsi, le procédé 4 comprend une étape 47 d'émission, par la carte réseau NIC1 du noeud émetteur 211, d'une requête de résolution d'adresse à partir d'une adresse IP de la passerelle 215 du premier cluster 21 pour obtenir une adresse physique, par exemple une adresse MAC, de la passerelle 215 du premier cluster 21, l'adresse IP de la passerelle 215 du premier cluster 21 étant stockée dans la première table de routage de la carte réseau NIC1 associée à l'identifiant du deuxième cluster 22. En effet, la passerelle 215 est la seule passerelle du cluster 21 permettant d'accéder au cluster 22.

Le procédé 4 comprend une étape 48 d'encapsulation Ethernet du paquet IP avec en en-tête de destination l'adresse MAC de la passerelle du premier cluster.

La trame Ethernet est ensuite transmise à une étape 49, par la carte réseau NIC1 du noeud 211, à la passerelle 215 du cluster 21, via le commutateur 214. A réception de la trame Ethernet, de manière classique, la passerelle 215 du premier cluster 21, va décapsuler la trame Ethernet, lire le paquet IP pour obtenir l'adresse IP de destination, c'est-à-dire l'adresse IP de la carte réseau destinatrice, et encapsuler le paquet IP dans une trame Ethernet avec une adresse physique de la passerelle 225 pour envoi à la passerelle 225 du deuxième cluster 22, en se basant sur la table de routage stockée par la passerelle 215 et indiquant que la deuxième passerelle 225 est la passerelle de destination pour le cluster 22. Le protocole ARP peut aussi être utilisé par la passerelle 215 du cluster 21 pour obtenir l'adresse MAC de la passerelle 225 du cluster 22, si la passerelle 215 ne stocke pas encore cette information dans sa table de commutation.

A réception, une étape 50 comprend la transmission, par la passerelle du deuxième cluster, de la trame Ethernet à la carte réseau destinatrice du noeud exécutant l'instance destinatrice. Pour cela, la passerelle 225 du cluster 22 désencapsule la trame Ethernet, lit l'adresse IP de destination, et utilise une table de commutation qu'elle stocke pour obtenir l'adresse MAC du moteur de bibliothèque réseau de la carte réseau destinatrice. Cette adresse MAC peut être obtenue par le protocole ARP si elle n'est pas encore comprise dans sa table de commutation.

La carte réseau destinatrice NIC1 du noeud 222 reçoit, à une étape 51, la trame Ethernet et la désencapsule. Elle désencapsule aussi le paquet IP pour obtenir la requête Portals et la au moins une donnée qu'elle contient, à destination de la machine virtuelle VMID2 du noeud 222. Cette donnée est alors transmise à une étape 52, à l'instance destinatrice, par la carte réseau, en utilisant la bibliothèque réseau, par exemple Portals, l'identifiant réseau de destination et l'identifiant de processus de destination.

Lors d'une étape optionnelle mais préférentielle 53, la carte réseau destinatrice NIC1 du noeud 222 acquitte à réception de la requête Portals et de la donnée qu'elle contient à destination de la carte réseau émettrice, l'acquittement empruntant le chemin inverse.

Pour terminer, précisons que le moteur Portals présent dans chaque carte réseau NIC1 a une adresse physique MAC dédiée. Cette adresse MAC de destination est utilisée par les trames Ethernet encapsulant une charge utile Portals. Comme pour les adresses MAC des interface Ethernet des machines virtuelles, celle-ci sera forgée à partir du NID physique du noeud et d'un identifiant de VM spécial : 128. Par exemple, l'adresse MAC du moteur Portals de la carte réseau NIC1 peut être 00:06:128:00:00:00.

## Revendications

1. Calculateur hautes performances comprenant une pluralité de clusters (21,22) interconnectés par un réseau IP (2), chaque cluster (21,22) comprenant :
- Au moins une passerelle Ethernet (215,225) configurée pour transmettre des données entre le cluster (21,22) et le réseau IP (2) stockant au moins une première table de routage comprenant au moins, pour chaque autre cluster de la pluralité de clusters (21,22), une association d'une adresse d'une passerelle (215,225) avec une adresse IP de destination comprise dans le cluster (21,22) comprenant la passerelle (215,225),
- Une pluralité de noeuds (N,211,212,221,222) de calcul et/ou de stockage, chaque noeud (N,211,212,221,222) :
∘ étant configuré pour exécuter au moins une instance d'une application de calcul hautes performances et/ou de stockage,
∘ comprenant au moins une carte réseau (NIC1) implémentant un protocole d'interconnexion hautes performances basé sur Ethernet et étant configurée pour implémenter un protocole de résolution d'adresse, la carte réseau (NIC1) stockant au moins une deuxième table de routage comprenant au moins, pour chaque autre cluster de la pluralité de clusters (21,22), une association d'une adresse d'une passerelle (215) du premier cluster (21) avec l'identifiant de l'autre cluster (22) accessible à partir de la passerelle (215) du premier cluster (21),
∘ stockant au moins une troisième table de routage comprenant au moins, pour chaque autre cluster de la pluralité de clusters (21,22), une association d'un identifiant d'une instance de l'application avec un identifiant du cluster comprenant le noeud (N,211,212,221,222) exécutant l'instance de l'application, avec un identifiant réseau unique de l'instance de l'application et avec une adresse IP de la carte réseau (NIC1) du noeud (N,211,212,221,222) exécutant l'instance de l'application,
- Au moins un commutateur d'interconnexion intra-cluster (214,224) configuré pour connecter chaque noeud (N,211,212,221,222) et la passerelle (215,225).

2. Système selon la revendication précédente dans lequel le protocole d'interconnexion hautes performances basé sur Ethernet met en oeuvre une bibliothèque réseau hautes performances.

3. Système selon la revendication 2 dans lequel le protocole d'interconnexion hautes performances basé sur Ethernet est respectivement BXI^{®} ou Infiniband^{®} et la bibliothèque réseau hautes performances est respectivement Portals^{®} ou Verbs^{®}.

4. Système selon l'une des revendications précédentes dans lequel un identifiant réseau et un identifiant de processus sont attribués à chaque instance de l'application de calcul hautes performances, l'identifiant réseau étant formé d'un identifiant du cluster (21,22) dans lequel le noeud (N,211,212,221,222) exécutant l'instance se trouve, d'un identifiant du noeud (N,211,212,221,222) exécutant l'instance ou d'une machine virtuelle exécutant l'instance, et d'un identifiant physique de la carte réseau (NIC1) du noeud (N,211,212,221,222) exécutant l'instance.

5. Système selon la revendication 4 selon lequel au moins un noeud de la pluralité de noeuds (N,211,212,221,222) de calcul comprend une machine virtuelle exécutant l'instance.

6. Procédé (4) de communication inter-clusters dans un calculateur hautes performances selon l'une quelconque des revendications précédentes, le procédé (4) comprenant :
- Réception (43), par une carte réseau (NIC1) d'un noeud émetteur (211) de la pluralité de noeuds (211,221) du premier cluster (21), d'une requête d'envoi de données à au moins une instance destinatrice exécutée par un noeud destinataire (222) de la pluralité de noeuds (221,222) du deuxième cluster (22), la requête provenant d'une instance d'une application de calcul hautes performances et comprenant un identifiant de l'instance destinatrice et au moins une donnée,
- Transcription (44), par la carte réseau (NIC1) du noeud émetteur, de la requête reçue en requête de la bibliothèque réseau du protocole d'interconnexion hautes performances, la transcription (44) de la requête comprenant la transcription de l'identifiant de l'instance destinatrice en un identifiant unique dans un format de la bibliothèque réseau,
- Encapsulation (46), par la carte réseau (NIC1) du noeud émetteur, de la requête transcrite dans un paquet IP comprenant l'adresse IP d'une carte réseau destinatrice (NIC1),
- Encapsulation (48) du paquet IP dans une trame Ethernet comprenant l'adresse de la passerelle (215) du premier cluster (21),
- Transmission (49), via le commutateur (214) et la passerelle (215) du premier cluster (21), à la passerelle du deuxième cluster (22), de la trame Ethernet,
- Transmission (50), par la passerelle du deuxième cluster (22), de la trame Ethernet à la carte réseau destinatrice (NIC1) du noeud exécutant l'instance destinatrice,
- Décapsulation (51), par la carte réseau destinatrice (NIC1), de la trame Ethernet et du paquet IP pour obtenir la requête comprenant la au moins une donnée,
- Transmission (52), par la carte réseau destinatrice (NIC1), à l'instance destinatrice, de la au moins une donnée.

7. Procédé (4) selon la revendication précédente, comprenant en outre, après l'étape de transcription (44) et avant l'étape d'encapsulation (46) dans un paquet IP, une étape de comparaison (45), par la carte réseau (NIC1) du noeud émetteur (211), de l'identifiant du cluster de l'identifiant réseau de l'instance destinatrice avec l'identifiant de cluster de la carte réseau (NIC1) du noeud émetteur (211), le procédé (4) de communication inter-cluster n'étant poursuivi que si l'identifiant du cluster de l'identifiant réseau de l'instance destinatrice est différent de l'identifiant de cluster de la carte réseau (NIC1) du noeud émetteur (211).

8. Procédé (4) selon l'une des revendications 6 ou 7 comprenant en outre, entre l'étape d'encapsulation (46) de la requête dans le paquet IP et l'encapsulation (48) du paquet IP dans la trame Ethernet, une étape d'émission (47), par la carte réseau (NIC1) du noeud émetteur, d'une requête de résolution d'adresse à partir d'une adresse IP de la passerelle (215) du premier cluster (21) pour obtenir une adresse physique de la passerelle du premier cluster (21), l'adresse IP de la passerelle (215) du premier cluster (21) étant stockée dans la deuxième table de routage associée à l'identifiant du deuxième cluster (22).

9. Procédé (4) selon l'une des revendications 6 à 8 comprenant en outre l'émission (53) d'un acquittement de réception de la au moins une donnée, par la carte réseau destinatrice (NIC1), à la carte réseau (NIC1) du noeud émetteur (211).

10. Procédé (4) selon l'une des revendications 6 à 9 dans lequel la bibliothèque réseau hautes performances utilisée est la bibliothèque réseau Portals^{®}, et dans lequel le format de la bibliothèque réseau est un identifiant comprenant l'identifiant réseau de l'instance destinatrice et l'identifiant de processus de l'instance destinatrice.

11. Procédé (4) selon la revendication 10 dans lequel le paquet IP comprend un en-tête indiquant que la requête encapsulée est une requête Portais^{®}.
